# DEMANDE DE BREVET EUROPEEN

(11) **EP 4 765 837 A1**
(43) Date de publication de la demande: **24.06.2026**
(21) Numéro de dépôt: 25223668.2
(22) Date de dépôt: 16.12.2025
(51) Int. Cl.: H04N 21/442, H04N 21/4788

(54) **PROCÉDÉS D ASSISTANCE AU PARTAGE D ÉLÉMENT MULTIMÉDIA ET DE REMONTÉE DE PERCEPTION, DISPOSITIFS ÉLECTRONIQUES, SYSTÈME, PRODUITS PROGRAMME D ORDINATEUR ET SUPPORTS CORRESPONDANTS**

(30) Priorité: 18.12.2024 FR 2414529
(71) Demandeur: Orange, 92130 Issy-les-Moulineaux (FR)
(72) Inventeur: LETELLIER, Jean-François, 92326 Chatillon (FR); FAURE, Julien, 92326 Chatillon (FR); MEYER, Frank, 92326 Chatillon (FR)

(57) **Abrégé**

L'invention concerne un procédé d'assistance comprenant :
- Une obtention d'un élément multimédia à partager par un premier utilisateur d'un premier dispositif électronique vers au moins deux seconds utilisateurs de seconds dispositifs électroniques, distincts du premier utilisateur ;
- Une fourniture, à destination dudit premier utilisateur, d'une information représentative d'une perception d'une portion de l'élément multimédia par les seconds utilisateurs, ladite information représentative étant une information ne permettant pas de distinguer lesdits seconds utilisateurs entre eux.

Elle concerne aussi un procédé de remontée au premier dispositif électronique, d'une perception de l'élément multimédia, ledit procédé étant mis en œuvre par un second dispositif et comprenant une fourniture, au premier dispositif électronique, d'une indication de perception d'une portion de l'élément multimédia par un second utilisateurs du second dispositif, ladite indication étant obtenue de façon automatique par ledit second dispositif.

L'invention concerne aussi les dispositifs électroniques, produits programmes d'ordinateur et supports correspondants.

## Description

### 1.Domaine technique

La présente application se rapporte au domaine des télécommunications et plus précisément au domaine du partage d'informations entre utilisateurs d'au moins un dispositif électronique. Elle concerne notamment un procédé d'assistance au partage et un procédé de remontée de perception, mis en œuvre respectivement par un ou plusieurs dispositif(s) électronique(s), ainsi que les dispositifs électroniques, produits programme d'ordinateur et supports d'enregistrement correspondants.

### 2.Etat de la technique

L'utilisation de moyens électroniques pour partager des informations entre individus est de plus en plus répandu. Les informations partagées peuvent être diverses. Par exemple, il peut s'agir d'informations audio (vocales par exemple), textuelles ou graphiques, ou d'une combinaison d'au moins deux de de ces types d'informations. Ainsi, il peut s'agir du partage d'un support textuel ou graphique, complété par des commentaires audio (d'un présentateur de ce support notamment)

La perception des informations partagées lors de ces communications peut varier selon les individus, ce qui peut nuire à la qualité de la communication.

La présente demande a pour objet de proposer des améliorations à au moins certains des inconvénients de l'état de la technique.

### 3.Exposé de l'invention

La présente demande vise à améliorer la situation à l'aide d'un procédé d'assistance au partage d'un élément multimédia, ledit procédé comprenant :
- une obtention au moins partielle d'un élément multimédia destiné à être partagé par un premier utilisateur d'un premier dispositif électronique vers au moins deux seconds utilisateurs de seconds dispositifs électroniques, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs.

Dans certains modes de réalisation, ladite information représentative peut par exemple être une information ne permettant pas de distinguer lesdits seconds utilisateurs entre eux.

Dans certains modes de réalisation, ladite information représentative peut par exemple être une information anonymisée.

Selon les modes de réalisation, il peut s'agir d'un partage synchrone (lors d'une téléconférence par exemple) ou asynchrone (par courriels, ou via un stockage dans un espace partagé). L'élément multimédia peut être un élément audio, textuel, image, vidéo, ou une combinaison de tels éléments.

Le premier dispositif peut être par exemple un terminal , une passerelle ou un serveur.

On note que le procédé peut être mis en œuvre dans des modes de réalisation où les premier et/ou seconds utilisateurs utilisent (à des instants différents par exemple) un même dispositif (les termes « premier dispositif » et/ou « seconds dispositifs » désignant alors un même dispositif). L'élément multimédia, dans de tels modes de réalisation, peut par exemple être un élément multimédia mis à disposition par le premier utilisateur dans un espace de stockage du dispositif et accessible en écriture au premier utilisateur et en lecture aux seconds utilisateurs. Dans au moins certains modes de réalisation, ledit procédé comprend une fourniture à destination dudit premier utilisateur d'une désignation de ladite portion dudit élément multimédia.

Dans au moins certains modes de réalisation, ladite information représentative tient compte d'une connaissance, par ledit au moins un second utilisateur, d'au moins un item audiovisuel présent dans ladite portion dudit élément multimédia.

Dans au moins certains modes de réalisation, ladite information représentative tient compte d'au moins une indication de perception reçue d'au moins un desdits second dispositifs via une interface de communication dudit premier dispositif.

Dans au moins certains modes de réalisation, ladite fourniture de ladite information représentative est mise en œuvre préalablement à un partage dudit élément multimédia entre ledit premier dispositif et lesdits seconds dispositifs.

De tels modes de réalisation peuvent par exemple permettre d'apporter une assistance lors de la création (construction) d'un élément multimédia, lorsque le premier utilisateur est le créateur de l'élément multimédia et sait déjà, lors de la création de l'élément multimédia, à quels « seconds » utilisateurs (entre autres) est destiné cet élément multimédia.

Dans au moins certains modes de réalisation, ladite fourniture de ladite information représentative est mise en œuvre lors d'un partage synchrone dudit élément multimédia par lesdits premier et second dispositifs, préalablement à un, et/ou lors d'un, rendu de ladite portion dudit élément multimédia.

Des modes de réalisation où l'information représentative de perception est fournie juste avant ou lors du rendu de la portion dudit élément multimédia à laquelle elle est relative peuvent par exemple aider le premier utilisateur (partageant l'élément multimédia) à accompagner ce partage d'explications personnalisées, tenant compte de cette information représentative. Par exemple, de tels modes de réalisation peuvent aider un premier utilisateur, présentateur d'un élément multimédia de type diaporama, à adapter une présentation orale de la portion concernée de l'élément multimédia en fonction de l'information représentative qui lui a été fournie (en apportant des explications plus fournies ou au contraire en limitant ses explications par exemple, lors de la présentation de la portion concernée). Des modes de réalisation où l'information représentative de perception est fournie un peu avant le rendu de la portion à laquelle elle est relative peuvent par exemple aider le premier utilisateur à adapter à l'avance ses explications (de façon par exemple à anticiper des difficultés de compréhension). Ainsi, des explications plus détaillées que prévues sur certains points en amont du rendu de la portion concernée peuvent permettre à un second utilisateur avec qui est partagé l'élément multimédia de mieux comprendre cette portion lors de son rendu.

Dans au moins certains modes de réalisation, ladite fourniture est mise en œuvre postérieurement au rendu de ladite portion dudit élément multimédia.

De tels modes de réalisation peuvent permettre un premier utilisateur partageant l'élément multimédia d'obtenir un retour sur la portion partagée, de façon à pouvoir réagir à ce retour, par exemple en fournissant « après coup » des explications complémentaires.

Dans au moins certains modes de réalisation, le procédé comprend une détection dudit item audiovisuel dans ladite portion dudit élément multimédia et ladite indication de perception est reçue en réponse à un envoi auxdits seconds dispositifs dudit item audiovisuel.

Dans au moins certains modes de réalisation, ladite détection dudit item audiovisuel et/ou ledit envoi dudit item audiovisuel sont effectués au fil de l'eau pendant ladite obtention dudit élément multimédia.

Dans au moins certains modes de réalisation, ledit procédé est mis en œuvre par un service d'assistance accessible après souscription au premier utilisateur.

Selon un autre aspect, la présente demande concerne un procédé de remontée, à un premier dispositif électronique, d'une perception relative à un élément multimédia, ledit procédé étant mis en œuvre par un second dispositif électronique et comprenant :
- une obtention au moins partielle d'au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

Ladite indication de perception peut par exemple être obtenue sans action spécifique dudit second utilisateur.

Dans au moins certains modes de réalisation, ladite fourniture de ladite indication de perception est mise en œuvre préalablement à un partage dudit élément multimédia par un premier utilisateur dudit premier dispositif avec ledit second utilisateur dudit second dispositif.

Dans au moins certains modes de réalisation, ladite fourniture de ladite indication de perception est mise en œuvre lors d'un partage synchrone dudit élément multimédia par lesdits premier et second dispositifs, préalablement à un, et/ou lors d'un, rendu de ladite portion dudit élément multimédia.

Dans au moins certains modes de réalisation, ledit item audiovisuel est obtenu par analyse dudit élément multimédia.

Dans au moins certains modes de réalisation, ladite analyse dudit élément multimédia est effectuée au fil de l'eau lors de ladite obtention dudit élément multimédia.

Dans au moins certains modes de réalisation, ladite portion dudit élément multimédia comprend au moins un item audiovisuel et où ladite indication de perception est représentative d'une présence, respectivement d'une absence, dudit item audiovisuel dans une base de connaissance associée audit second utilisateur.

Dans au moins certains modes de réalisation, il peut s'agir d'une base regroupant des mots bien connus, respectivement mal connus, du second utilisateur.

Dans au moins certains modes de réalisation, ladite portion dudit élément multimédia comprend au moins un item audiovisuel et ladite indication de perception tient compte d'une désignation dudit item audiovisuel via une interface utilisateur dudit second dispositif.

Dans au moins certains modes de réalisation, ledit procédé est mis en œuvre par un service d'assistance accessible après souscription dudit second utilisateur dudit second dispositif.

Les caractéristiques, présentées isolément dans la présente demande en lien avec certains modes de réalisation d'au moins un des procédés de la présente demande peuvent être combinées entre elles selon d'autres modes de réalisation de ce procédé.

Selon un autre aspect, la présente demande concerne également un dispositif électronique adapté à mettre en œuvre au moins l'un des procédés de la présente demande dans l'un quelconque de ses modes de réalisations.

Par exemple, la présente demande concerne ainsi un premier dispositif électronique comprenant au moins un processeur configuré pour une assistance au partage d'un élément multimédia, ladite assistance comprenant :
- une obtention au moins partielle d'un élément multimédia destiné à être partagé par un premier utilisateur dudit premier dispositif électronique vers au moins deux seconds utilisateurs de seconds dispositifs électroniques, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs.

Dans certains modes de réalisation, ladite information représentative peut être une information ne permettant pas de distinguer lesdits seconds utilisateurs entre eux, comme une information anonymisée.

Par exemple, la présente demande concerne ainsi un second dispositif électronique comprenant au moins un processeur configuré pour une remontée, à un premier dispositif électronique, d'une perception relative à un élément multimédia, ladite remontée comprenant :
- une obtention au moins partielle d'au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

Selon un autre aspect, la présente demande concerne également un système de télécommunication comprenant au moins un premier dispositif électronique adapté à mettre en œuvre le procédé d'assistance de la présente demande dans l'un quelconque de ses modes de réalisations et au moins un second dispositif électronique adapté à mettre en œuvre le procédé de remontée de perception de la présente demande dans l'un quelconque de ses modes de réalisations.

Ainsi, la présente demande concerne par exemple un système de télécommunication comprenant au moins un premier dispositif électronique et au moins un second dispositif électronique, ledit au moins un premier dispositif électronique comprenant au moins un processeur configuré pour une assistance au partage d'un élément multimédia, ladite assistance comprenant :
- une obtention au moins partielle d'un élément multimédia destiné à être partagé par un premier utilisateur dudit premier dispositif électronique vers au moins deux seconds utilisateurs dudit second dispositif électronique, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs ;

Et ledit au moins un second dispositif électronique comprenant un moins un processeur configuré pour une remontée, audit premier dispositif électronique, d'une perception relative audit élément multimédia, ladite remontée comprenant:
- une obtention au moins partielle dudit au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

Dans certains modes de réalisation, ladite information représentative peut être une information ne permettant pas de distinguer lesdits seconds utilisateurs entre eux, comme une information anonymisée.

La présente demande concerne aussi un programme d'ordinateur comprenant des instructions pour la mise en œuvre d'au moins un mode de réalisation d'au moins un des procédés ci-dessus, lorsque le programme est exécuté par un processeur et un support d'enregistrement (ou d'informations ) lisible par un dispositif électronique et sur lequel est enregistré le programme d'ordinateur .

Par exemple, la présente demande concerne ainsi un programme d'ordinateur comprenant des instructions pour la mise en œuvre, lorsque le programme est exécuté par un processeur d'un premier dispositif électronique, d'un procédé d'assistance au partage d'un élément multimédia, ladite assistance comprenant :
- une obtention au moins partielle d'un élément multimédia destiné à être partagé par un premier utilisateur dudit premier dispositif électronique vers au moins deux seconds utilisateurs d'un second dispositif électronique, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs.

Dans certains modes de réalisation, ladite information représentative peut être une information ne permettant pas de distinguer lesdits seconds utilisateurs entre eux, comme une information anonymisée.

La présente demande concerne aussi, par exemple, un programme d'ordinateur comprenant des instructions pour la mise en œuvre, lorsque le programme est exécuté par un processeur d'un second dispositif électronique, d'un procédé de remontée, à un premier dispositif électronique, d'une perception relative à un élément multimédia, ledit procédé comprenant :
- une obtention au moins partielle d'au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

Par exemple, la présente demande concerne aussi un support d'informations lisible par un processeur d'un premier dispositif électronique et sur lequel est enregistré un programme d'ordinateur comprenant des instructions pour la mise en œuvre, lorsque le programme est exécuté par le processeur, d'un procédé d'assistance au partage d'un élément multimédia, ladite assistance comprenant :
- une obtention au moins partielle d'un élément multimédia destiné à être partagé par un premier utilisateur dudit premier dispositif électronique vers au moins deux seconds utilisateurs d'un second dispositif électronique, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs.

Dans certains modes de réalisation, ladite information représentative peut être une information ne permettant pas de distinguer lesdits seconds utilisateurs entre eux, comme une information anonymisée.

La présente demande concerne aussi, par exemple, un support d'enregistrement lisible par un processeur d'un second dispositif électronique et sur lequel est enregistré un programme d'ordinateur comprenant des instructions pour la mise en œuvre, lorsque le programme est exécuté par le processeur, d'un procédé de remontée, à un premier dispositif électronique, d'une perception relative à un élément multimédia, ledit procédé étant mis en œuvre par un second dispositif électronique et comprenant :
- une obtention au moins partielle d'au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations (ou d'enregistrements) mentionnés dans la présente demande peuvent être n'importe quelle entité ou quel dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations (ou d'enregistrement) peut être un circuit intégré dans lequel un programme est incorporé, le circuit étant adapté pour exécuter ou pour être utilisé dans l'exécution de l'un quelconque des modes de réalisation d'au moins un des procédés objet de la présente demande de brevet.

De façon générale, par obtention d'un élément d'information, on entend dans la présente demande par exemple une réception de cet élément d'information depuis un réseau de communication, et/ou une acquisition de cet élément d'information (via par exemple des éléments d'interface utilisateur et/ou des capteurs), et/ou une création de cet élément d'information par divers moyens de traitement tels que par copie, et/ou encodage, et/ou décodage, et/ou transformation etc. et/ou un accès de cet élément d'information depuis un support de stockage local ou distant accessible à au moins un dispositif mettant en oeuvre, au moins partiellement, cette obtention.

De façon générale, par fourniture d'un élément d'information, on entend dans la présente demande par exemple une transmission de cet élément d'information (précédée éventuellement d'une copie, et/ou d'une transformation et/ou d'un encodage ) sur un réseau de communication, et/ou un rendu de cet élément d'information via des éléments d'interface utilisateur de sortie, et/ou un enregistrement de cet élément d'information sur un support de stockage local ou distant accessible à au moins un dispositif mettant en œuvre, au moins partiellement, cette fourniture.

### 4.Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La [Fig 1] présente une vue simplifiée d'un système, cité à titre d'exemple, dans lequel au moins certains modes de réalisation des procédés d'assistance au partage et/ou de remontée de perception de la présente demande peuvent être implémentés,
La [Fig 2] présente une vue simplifiée d'un dispositif adapté à mettre en œuvre au moins certains modes de réalisation du procédé d'obtention et/ou de remontée de la présente demande.
La [Fig 3A] présente un aperçu du procédé d'assistance au partage de la présente demande, dans certains de ses modes de réalisation
La [Fig 3B] présente, de façon plus détaillée que la figure 3A, le procédé d'assistance au partage de la présente demande, dans certains de ses modes de réalisation
La [Fig 3C] présente, de façon plus détaillée que la figure 3A, le procédé d'assistance au partage de la présente demande, dans certains de ses modes de réalisation
La [Fig 4A] présente un aperçu du procédé de remontée de perception de la présente demande, dans certains de ses modes de réalisation.
La [Fig 4B] présente, de façon plus détaillée que la figure 4A, le procédé de remontée de perception de la présente demande, dans certains de ses modes de réalisation.
La [Fig 4C] présente, de façon plus détaillée que la figure 4A, le procédé de remontée de perception de la présente demande, dans certains de ses modes de réalisation.
La [Fig 5] présente un aperçu d'un chronogramme dans une mise en oeuvre conjointe des procédés d'assistance au partage et de remontée de perception de la présente demande, dans certains de leurs modes de réalisation

### 5.Description des modes de réalisation

La présente demande vise à aider un premier utilisateur, producteur ou présentateur d'un élément multimédia (un contenu ou un flux audiovisuel par exemple), à obtenir un retour sur cet élément multimédia. Le retour peut être relatif à la perception de l'élément multimédia par au moins une des personnes avec laquelle le premier utilisateur souhaite partager, ou est en train de partager, cet élément multimédia. Ces personnes sont aussi qualifiées, dans la demande, de consommateur(s) (potentiel(s) ou effectif(s)) de l'élément multimédia et de « second » utilisateurs (pour les distinguer du premier utilisateur partageant l'élément multimédia). Ce retour peut notamment servir au premier utilisateur pour évaluer la pertinence de l'élément multimédia à partager au regard des seconds utilisateurs.

Le retour peut par exemple être fourni au premier utilisateur sous la forme d'une information représentative de perception, formant par exemple une synthèse d'au moins certaines des remontées individuelles des seconds utilisateurs.

Selon les modes de réalisation, le retour peut être fourni au premier utilisateur en temps réel (pendant qu'il construit ou consulte un élément multimédia en vue d'un partage futur, ou pendant qu'il le partage) ou en temps différé (après cette construction, cette consultation ou ce partage).

Selon les outils de communication et selon l'élément multimédia utilisés, le partage peut s'effectuer de façon « synchrone » (par exemple lors d'une téléconférence) entre le premier et les seconds utilisateurs ou de façon asynchrone (par exemple par partage d'un fichier texte par messagerie électronique). Par exemple, il peut s'agir d'une simple mise à disposition, par le premier utilisateur, de cet élément multimédia à l'attention de ce ou ces seconds utilisateurs.

Une telle solution peut notamment être particulièrement intéressante dans des situations où le premier utilisateur ne connaît pas (ou connaît peu) les seconds utilisateurs.

Par exemple, lors d'une visioconférence, un participant partageant un document (par exemple une présentation textuelle) avec les autres participants à la visioconférence et le commentant (oralement par exemple), peut obtenir en temps réel, grâce à la solution de la présente demande, un retour sur la perception par ces autres participants de certains passages de ce document. Il peut s'agir par exemple d'information(s) relatives à leur niveau de compréhension, à leur niveau d'accord ou désaccord, et/ou à leur niveau d'intérêt , sur certains passages du document.

La solution permet en particulier d'informer le présentateur (premier utilisateur) des termes du document peu ou mal connus de son auditoire (seconds utilisateurs), de façon à lui permettre d'adapter son discours en conséquence (par exemple d'expliciter des sigles, reformuler une phrase etc..).

Similairement, la solution peut également permettre au présentateur d'obtenir un retour sur certains de ses commentaires, de façon par exemple à pouvoir rappeler ou reformuler une explication mal comprise de certains participants.

Une telle solution peut notamment trouver des applications dans des cas où le commentateur n'a pas la possibilité de visionner le visage des participants (et donc d'évaluer instinctivement leurs réactions à son discours).

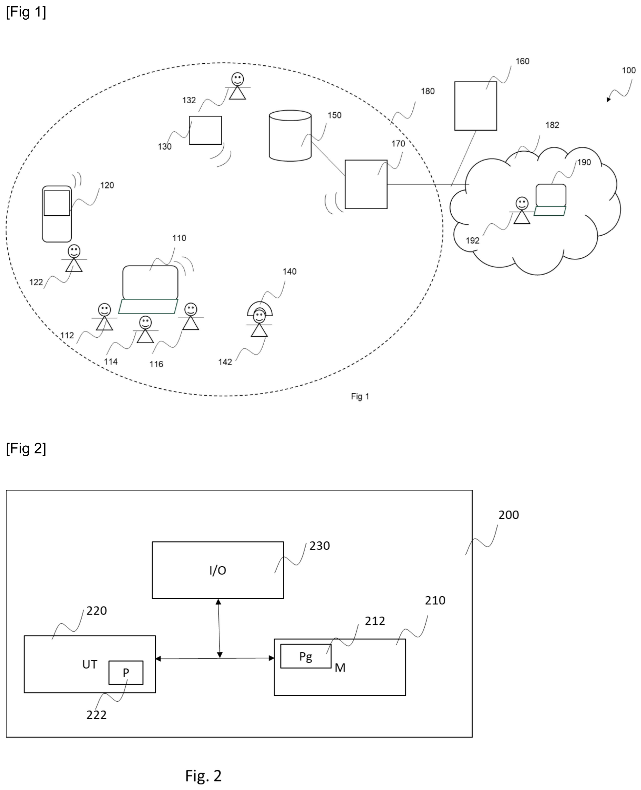

On décrit à présent, en lien avec la figure 1, de façon plus détaillée la présente demande.

La figure 1 représente un système de télécommunication 100 dans lequel certains modes de réalisation de l'invention peuvent être mis en oeuvre. Le système 100 comporte un ou plusieurs dispositifs électroniques, certains au moins pouvant communiquer entre eux via un ou plusieurs réseaux de communication 180, 182, éventuellement interconnectés (via par exemple un dispositif d'interconnexion 170 (aussi appelé passerelle ou « gateway » selon la terminologie anglaise), comme un réseau local ou LAN (Local Area Network) et/ou un réseau de type étendu, ou WAN (Wide Area Network). Des exemples de réseau peuvent comprendre un réseau LAN d'entreprise ou domestique et/ou un réseau WAN de type internet, ou cellulaire, GSM - Global System for Mobile Communications, UMTS - Universal Mobile Telecommunications System, Wifi - Wireless, etc.

Les dispositif électroniques du système 100 peut être divers : il peut s'agir par exemple de terminaux 110, 120, 130, 190, (tel qu'un ordinateur portable, un smartphone, un téléviseur intelligent (parfois appelé « Smart TV ») et/ou une tablette) comme illustré en figure 1, de casques 140 de réalité augmentée, mixte ou virtuelle, d'objets connectés, et/ou de serveur(s), par exemple un serveur d'application 160, notamment d'application de téléconférence (comme un serveur de visioconférence), un dispositif de stockage 150. Le système peut également comprendre des éléments de gestion et/ou d'interconnexion réseau (non représentés) .Ces dispositifs électroniques peuvent être associés à au moins un utilisateur 112, 114, 116, 122, 132, 142,192, (par le biais par exemple d'un compte utilisateur accessible par login), certains des dispositifs électroniques 120 pouvant être associés à un même utilisateur 122 , certains des dispositifs électroniques 110 pouvant être partagés par plusieurs utilisateurs 112, 114, 116 (ces dispositifs 110 étant par exemple susceptible d'être utilisés par des utilisateurs différents à des instants différents).

Au moins certains des dispositifs du système 100 sont susceptibles d'être utilisés par leurs utilisateurs respectifs pour le partage (au sein d'un même dispositif ou entre dispositifs) d'au moins un élément multimédia.

Cet élément multimédia peut être divers. Par exemple, il peut avoir au moins une composante de type audio, image, vidéo et/ou textuelle ou une combinaison de telle(s) composantes(s). Il peut s'agir d'un contenu déjà stocké en mémoire dans sa totalité (comme un diaporama), ou d'un élément (flux) en cours de construction (ou diffusion).

La figure 2 illustre une structure simplifiée d'un dispositif électronique 200 du système 100, adapté à mettre en œuvre les principes de la présente demande. Selon les modes de réalisation, il peut s'agir d'un serveur (par exemple le serveur 160 de la figure 1), et/ou d'un terminal (par exemple un des terminaux 110, 120, 130, 140 et 190 de la figure 1).

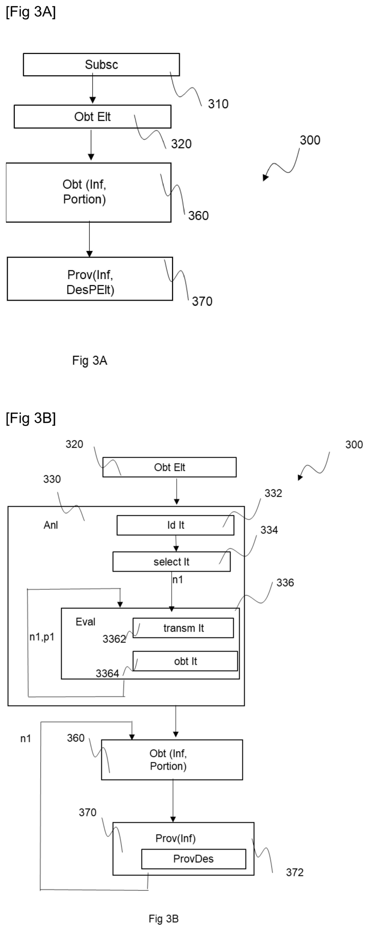

Le dispositif 200 comprend notamment au moins une mémoire M 210. Le dispositif 200 peut notamment comprendre une mémoire tampon, une mémoire volatile, par exemple de type RAM (pour « Random Access Memory » selon la terminologie anglaise), et/ou une mémoire non volatile (par exemple de type ROM (pour « Read Only Memory » selon la terminologie anglaise). Le dispositif 200 peut également comprendre une unité de traitement UT 220, équipée par exemple d'au moins un processeur P 222, et pilotée par un programme d'ordinateur PG 212 stocké en mémoire M 210. A l'initialisation, les instructions de code du programme d'ordinateur PG sont par exemple chargées dans une mémoire RAM avant d'être exécutées par le processeur P. Ledit au moins un processeur P 222 de l'unité de traitement UT 220 peut notamment mettre en œuvre, individuellement ou collectivement, l'un quelconque de modes de réalisation d'au moins un des procédés d'assistance et/ou de remontée de la présente demande (décrits respectivement en relation avec les figures 3A et 3B notamment), selon les instructions du programme d'ordinateur PG.

Le dispositif peut également comporter, ou être couplé à, au moins un module d'entrée/ sortie I/O 230, tel qu'un module de communication, permettant par exemple au dispositif 200 de communiquer avec d'autres dispositifs du système 100, via des interfaces de communication filaires ou sans fils, et/ou tel qu'un module d'interfaçage avec un utilisateur du dispositif (aussi appelé plus simplement dans cette demande « interface utilisateur »).

Par interface utilisateur du dispositif, on entend par exemple une interface intégrée au dispositif 200, ou une partie d'un dispositif tiers couplé à ce dispositif par des moyens de communication filaires ou sans fils. Par exemple, il peut s'agir d'un écran secondaire du dispositif, d'une caméra (permettant d'acquisition de commandes gestuelles d'un opérateur par exemple) ou de hauts parleurs connectés par une technologie sans fils au dispositif.

Une interface utilisateur peut notamment être une interface utilisateur, dite «de sortie», adaptée à un rendu (ou au contrôle d'un rendu) d'un élément de sortie d'une application informatique utilisée par le dispositif 200, par exemple une application s'exécutant au moins partiellement sur le dispositif 200 ou une application « en ligne » s'exécutant au moins partiellement à distance, par exemple sur le serveur 160 du système 100. Des exemples d'interface utilisateur de sortie du dispositif incluent un ou plusieurs écrans, notamment au moins un écran graphique (tactile par exemple), un ou plusieurs haut-parleurs, un casque connecté (notamment un casque de réalité augmentée, mixte ou virtuelle).

Par rendu, on entend ici une restitution (ou « output » selon la terminologie anglaise) sur au moins une interface utilisateur, sous une forme quelconque, par exemple comprenant des composantes textuelles, audio, images, et/ou vidéo, ou une combinaison de telles composantes.

Par ailleurs, une interface utilisateur peut être une interface utilisateur, dite «d'entrée», adaptée à une acquisition d'une action ou d'une réaction d'un utilisateur du dispositif 200 (notamment une action telle qu'une commande, ou une réaction telle qu'un mouvement, une expression physique ou verbale etc..) . Il peut s'agir notamment d'une action ou d'une réaction en lien avec un item rendu par le dispositif 200 (comme une réaction à cet item), et/ou d'une commande à transmettre à une application informatique utilisée par le dispositif 200, par exemple une application s'exécutant au moins partiellement sur le dispositif 200 ou une application « en ligne » s'exécutant au moins partiellement à distance, par exemple sur le serveur 160 du système 100. Des exemples d'interface utilisateur d'entrée du dispositif 200 incluent un ou plusieurs capteurs permettant de détecter un mouvement (par exemple un mouvement oculaire d'un utilisateur) comme un ou plusieurs capteurs de mouvement, un ou plusieurs dispositifs de suivi du regard (« eye-tracking » selon la terminologie anglaise), une ou plusieurs caméras, des capteurs permettant d'acquérir un son comme un microphone, un moyen d'acquisition d'une commande (par exemple une ou plusieurs touche(s), un clavier, un bouton, un dispositif de pointage (souris), un actionneur d'un écran tactile) etc.

Le dispositif peut également comprendre des analyseurs d'image capables d"interpréter une expression corporelle d'un utilisateur ou d'identifier un utilisateur sur un élément visuel (image, vidéo) représentant cet utilisateur.

Ledit au moins un microprocesseur du dispositif 200 peut notamment être adapté pour mettre en œuvre au moins l'un des procédés de la présente demande.

Ainsi, dans certains modes de réalisation, ledit au moins un microprocesseur du dispositif 200 peut notamment être adapté pour mettre en œuvre un procédé d'assistance au partage d'un élément multimédia, ledit procédé comprenant :
- une obtention au moins partielle d'un élément multimédia destiné à être partagé par un premier utilisateur dudit dispositif électronique vers au moins deux seconds utilisateurs de seconds dispositifs électroniques, lesdits seconds utilisateurs étant distincts dudit premier utilisateur ;
- une fourniture, à destination dudit premier utilisateur, d'au moins une information représentative d'une perception d'une ou plusieurs portion(s) dudit élément multimédia par au moins un desdits seconds utilisateurs, ladite information représentative étant par exemple une information ne permettant pas de distinguer lesdits seconds utilisateurs entre eux (comme une information anonymisée).

Dans certains modes de réalisation, ledit au moins un microprocesseur du dispositif 200 peut notamment être adapté pour mettre en œuvre un procédé de remontée, à un premier dispositif électronique (différent ou confondu avec le dispositif 200), d'une perception relative à un élément multimédia, ladite remontée comprenant :
- une obtention au moins partielle d'au moins un élément multimédia ;
- Une fourniture, audit premier dispositif électronique, d'au moins une indication de perception d'une ou plusieurs portion(s) dudit élément multimédia par un second utilisateur dudit second dispositif, ladite indication de perception étant obtenue de façon automatique par ledit second dispositif.

A cette fin, le dispositif 200 peut comprendre par exemple, entre autres, un module d'analyse de l'élément multimédia, un module de gestion de connaissance, et/ou un module de transfert, et un module de traitement des remontées relatives aux seconds utilisateurs destinataires du partage l'élément

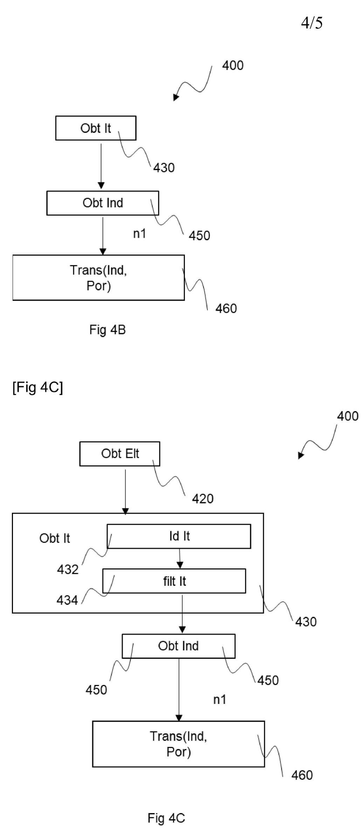

Le module d'analyse peut par exemple être en charge de l'analyse de l'élément multimédia effectuée par le dispositif 200 décrite notamment en liaison par les figures 3B et 4C. Le module de gestion de connaissances peut par exemple être en charge de recherches dans des bases de connaissance décrites ci-après notamment en liaison par les figures 3B et 4C.

Le module de transfert peut par exemple être en charge des transmissions de données depuis, ou vers, le dispositif 200 pour la mise en œuvre de l'un au moins des procédés de la présente demande.

Optionnellement, le dispositif peut également comprendre des modules de conversion, tels des convertisseurs de texte en voix ou à l'inverse de voix en texte.

On note que dans certains modes de réalisation, le dispositif peut être adapté à la fois à la mise en œuvre du procédé d'assistance et au procédé de remontée, que ce soit à des instants différents ou de façon simultanée. Dans d'autres modes de réalisation, au contraire, les procédés de la présente demande peuvent être mis en œuvre par des dispositifs différents. Certains des modules d'entrée -sorties ci-dessus sont optionnels et peuvent donc être absents du dispositif 200 dans certains modes de réalisation. Notamment, si la présente demande est parfois détaillée en lien avec un premier dispositif communiquant avec au moins un second dispositif du système 100, l'un au moins un des procédés d'assistance et de remontée de perception peut également être mis en œuvre localement par un dispositif (à des instants différents par exemple), certains des modules de communication pouvant alors être absents (ou non actifs).

Au contraire, dans certains de ses modes de réalisation, l'au moins un des procédés d'assistance ou de remontée peut être mis en œuvre de façon distribuée entre au moins deux dispositifs 110, 120, 130, 140, 150, 160, 170, 190 du système 100.

Par exemple, l'un ou l'autre des procédés peuvent être exécutés partiellement sur un terminal et un serveur, et utiliser au moins une base de connaissance dédiée à un utilisateur d'un autre terminal et accessible à ce serveur (via un réseau local par exemple).

Par le terme « module » ou le terme « composant » ou «élément » du dispositif, on entend ici un élément matériel, notamment câblé, ou un élément logiciel, ou une combinaison d'au moins un élément matériel et d'au moins un élément logiciel. Les procédés selon l'invention peuvent donc être mis en oeuvre de diverses manières, notamment sous forme câblée et/ou sous forme logicielle.

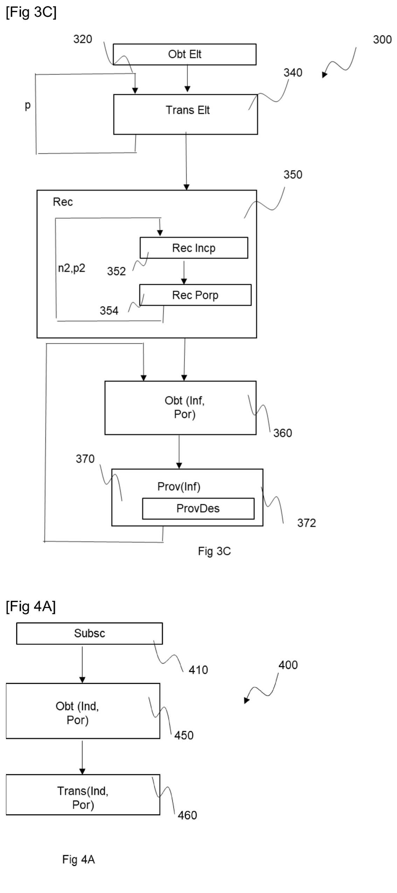

On présente à présent plus en détail , en liaison avec les figures 3A à 3C, certains modes de réalisation du procédé d'assistance 300 de la présente demande (certains modes de réalisation du procédé de remontée de la présente demande sont ensuite détaillés en liaison avec les figures 4A à 4C).

Le procédé 300 peut par exemple être implémenté par le dispositif électronique 200 illustré en figure 2. Il peut s'agir notamment d'un premier dispositif (comme un terminal) dont un utilisateur souhaite partager un élément multimédia avec d'autres utilisateurs de ce dispositif électronique ou d'autres dispositifs électroniques, ou encore d'un serveur du système 100 communicant avec un tel premier dispositif pour fournir à ce premier utilisateur un service d'assistance. Comme déjà exposé, on qualifie par simplicité dans la demande l'utilisateur souhaitant partager un élément multimédia de « premier » utilisateur et les «autres » utilisateurs de « seconds » utilisateurs.

Comme illustré en figure 3A, le procédé 300 d'assistance peut comprendre une obtention 320, au moins partielle, d'un élément multimédia à partager. Dans certains modes de réalisation, il peut s'agir d'un élément déjà construit (un contenu multimédia par exemple), accessible localement ou à distance au premier dispositif). Cet élément multimédia peut par exemple avoir été construit préalablement par un utilisateur pour lequel le procédé d'assistance est mis en œuvre, ou par un utilisateur tiers. Par exemple, il peut s'agir d'un élément multimédia disponible sur étagère (comme un élément multimédia appartenant à une librairie de contenus). Dans de tels modes de réalisation, le procédé d'assistance peut alors permettre une évaluation a posteriori de l'élément multimédia au regard d'au moins certains des consommateurs attendus de cet élément multimédia (avant sa diffusion à ces consommateurs ou lors de sa diffusion). Dans certains modes de réalisation, il peut s'agit d'un élément multimédia en cours de construction, partiellement obtenu, sur lequel le procédé d'assistance peut être mis en oeuvre au fil de l'eau en fonction des consommateurs « cibles » de cet élément multimédia. Par exemple, il peut s'agir d'un flux audiovisuel en cours d'acquisition, dont la diffusion est effectuée au fil de son acquisition. Par exemple, il peut s'agir d'un flux audiovisuel correspondant au discours (audio ou vidéo) d'un participant à une visioconférence.

L'élément multimédia peut notamment être généré sur le dispositif 200 (notamment lorsqu'il s'agit d'un dispositif électronique de type terminal) ou reçu par le dispositif 200 (par exemple lorsque le dispositif 200 est un serveur).

Comme illustré en figure 3A, le procédé d'assistance peut comprendre une obtention 360 d'au moins une information représentative d'une perception par au moins un des seconds utilisateurs (et consommateurs cibles) d'au moins une portion de l'élément multimédia. Cette information représentative d'une perception est aussi appelée par simplicité ci-après information de synthèse.

Dans l'exemple de la figure 3A, le procédé d'assistance peut comprendre en outre une fourniture 370 de cette information de synthèse. Par fourniture, on entend un traitement comprenant un rendu sur une interface utilisateur de sortie du dispositif 200, et/ un envoi vers un autre dispositif, et/ou un stockage sur et/ou depuis le dispositif 200. Optionnellement, la fourniture 370 de l'information de synthèse peut être accompagnée d'une désignation d'au moins une portion de l'élément multimédia.

Selon un premier exemple, lorsque le dispositif 200 est un serveur (comme le serveur 160 de la figure 1), la fourniture peut comprendre un envoi vers le premier dispositif du premier utilisateur souhaitant partager l'élément multimédia).

Selon un second exemple, quand le dispositif 200 est le dispositif du premier utilisateur souhaitant partager l'élément multimédia, la fourniture de l'information de synthèse peut comprendre un rendu de l'information de synthèse (ou d'un élément d'information tenant compte de cette information de synthèse) sur une interface utilisateur de sortie du dispositif 200.

Lorsque la fourniture de l'information de synthèse comprend un rendu, ce rendu peut par exemple être synchronisé avec l'élément multimédia (de façon par exemple à « rendre » en même temps une page d'un diaporama et les informations de synthèse se rapportant au contenu de cette page).

Selon un troisième exemple; la fourniture peut comprendre un stockage de l'information de synthèse (par exemple dans un dispositif de stockage tel que le dispositif 150 de la figure 1) pour utilisation ultérieure. L'information de synthèse peut notamment être stockée en association avec l'élément multimédia (sous forme de métadonnées par exemple). Ainsi, quand les informations de synthèse sont fournies avant le partage de l'élément multimédia, les informations de synthèse peuvent dans certains modes de réalisation être stockées en association avec l'élément multimédia, pour être rendues sur le dispositif d'un « premier » utilisateur partageant cet élément multimédia lors du partage de cet élément multimédia (par exemple de façon synchrone par rapport à la partie de l'élément multimédia couramment partagée) de façon par exemple à assister ce « premier » utilisateur lorsqu'il présente cet élément multimédia lors de son partage.

Les informations de synthèse fournies au premier utilisateur, grâce au procédé d'assistance de la présente demande, peuvent ainsi permettre par exemple d'adapter la diffusion de l'élément multimédia en conséquence (par exemple par le biais de la diffusion d'un second élément complémentaire à cet élément multimédia (comme un commentaire oral ou textuel par exemple), en accompagnement de la diffusion de l'élément multimédia).

Les informations de synthèse fournies au premier utilisateur peuvent aussi permettre dans certains modes de réalisation où l'élément multimédia est modifiable, de modifier l'élément multimédia en conséquence, préalablement à sa diffusion, pour une meilleure adaptation aux consommateurs « cibles » de cet élément multimédia.

Comme exposé précédemment, par fourniture d'une information de synthèse, on entend notamment un rendu de l'information de synthèse sur une interface utilisateur de sortie du premier dispositif, et/ou un stockage de l'information de synthèse pour utilisation ultérieure de cette information, par exemple en association avec l'élément multimédia (sous forme de métadonnée(s) par exemple) .

Ainsi, quand les informations de synthèse sont fournies avant diffusion de l'élément multimédia, les informations de synthèse peuvent dans certains modes de réalisation être stockées en association avec l'élément multimédia, pour être rendues sur le premier dispositif lors de la diffusion de l'élément multimédia, (par exemple de façon synchrone par rapport à la portion de l'élément multimédia) de façon par exemple à assister un présentateur de cet élément multimédia utilisant le premier dispositif.

On note que le procédé d'assistance peut être mis en œuvre selon les modes de réalisation de façon systématique ou sur souscription 310 à un service (et éventuellement activation manuelle (non illustrée) de ce service par le premier utilisateur souhaitant partager un élément multimédia, cette souscription 310 et/ou cette éventuelle activation pouvant être mise(s) en œuvre préalablement ou lors de ce partage.

Par exemple, le procédé d'assistance peut être mis en œuvre au fil de l'eau, lors du rendu d'un élément multimédia (de façon périodique ou en fonction des variations du rendu de l'élément multimédia (lors de chaque changement de page quand l'élément multimédia est un diaporama par exemple). Selon un autre exemple, il peut être mis en œuvre sur demande du premier utilisateur (via l'interface utilisateur du dispositif 200 par exemple).

On présente à présent plus en détails l'obtention d'informations de synthèse en relation avec la figure 3B, dans des modes de réalisation où le procédé d'assistance met en œuvre une analyse 330 au moins partielle de l'élément multimédia au moins partiellement obtenu 320 par le dispositif 200, préalablement au partage ou lors du partage de cet élément multimédia. (On note que cette analyse peut être optionnelle dans d'autres modes de réalisation comme exposé plus loin).

Par simplicité, la souscription au service d'assistance (optionnelle) n'est pas illustrée en figure 3B.

Comme illustré en figure 3B, dans certains modes de réalisation, une analyse 330 au moins partielle de l'élément multimédia peut être mise en œuvre, de façon à permettre d'identifier 332 des items de cet élément multimédia dont il s'agit d'évaluer 336 a priori la perception par des seconds utilisateurs, consommateurs « cibles » de cet élément multimédia (p1 seconds utilisateurs dans l'exemple de la figure 3A, avec p1 entier naturel supérieur à 1). Ces items peuvent par exemple être des items extraits de l'élément multimédia (par exemple par des techniques d'analyse de langages). Il peut s'agir par exemple d'entités nommées, de mots-clés, d'éléments graphiques particuliers statiques (logo par exemple) ou dynamiques (vidéo par exemple), de sigles, d'abréviation, de formules mathématiques) etc..

Optionnellement, avant ou lors de l'évaluation 336, le procédé peut comprendre une sélection 334 d'items à évaluer parmi les items identifiés. Par exemple ; les items sélectionnés peuvent comprendre des items considérés, par paramétrage ou annotation de l'élément multimédia par exemple, comme importants pour l'auteur et/ou le propriétaire de l'élément multimédia, ou le premier utilisateur. De façon complémentaire (alternative ou cumulative), les items sélectionnées peuvent comprendre des items considérés a priori comme susceptibles d'être mal-connus par au moins un des consommateurs de l'élément multimédia La sélection peut par exemple comprendre une recherche dans une base de connaissance accessible au dispositif 200, comme une base de connaissance générale au système 100 (un dictionnaire) et/ou une recherche dans une base répertoriant des items audiovisuels mal-connus de l'utilisateur souhaitant partager l'élément multimédia (ou à l'inverse des items audiovisuels bien connus de cet utilisateur).

L'évaluation 336 des items identifiés (et optionnellement sélectionnés) peut par exemple être effectuée par recherche dans au moins une base de connaissance accessible au dispositif 200, comme au moins une base de connaissance répertoriant des items audiovisuels bien connus (respectivement mal connus) d'au moins un des seconds utilisateurs consommateurs cibles de l'élément multimédia (comme des bases associées spécifiquement chacune à un des consommateurs cibles, ou une base associée à plusieurs consommateurs ayant des caractéristiques communes, telles qu'une appartenance à une même organisation ou des caractéristiques socio-professionnelles similaires). Notamment, il peut s'agir d'une base de connaissance accessible localement au dispositif 200 (par exemple lorsque celui-ci est un serveur implémentant de façon « centralisée » le procédé d'assistance), ou encore de base(s) accessibles à distance, par exemple sur un dispositif de stockage distant, ou via les dispositifs qu'utilisent ces seconds utilisateurs (par interrogation par exemple de ces dispositifs). Dans l'exemple illustré en figure 3B, l'évaluation porte sur n1 items, avec n1 entier naturel au moins égal à 1.

L'évaluation 336 des items identifiés peut comprendre optionnellement une transmission 3362 à au moins un dispositif tiers d'au moins un item à évaluer. Ce dispositif tiers peut par exemple être un serveur (comme le serveur 160 de la figure 1), un dispositif de stockage (comme le dispositif 150 de la figure 1, ou un des dispositifs des « seconds » utilisateurs vers qui l'élément multimédia est à partager (par exemple au moins des terminaux 110, 120, 130, 140, 190 de la figure 1))
L'évaluation 336 des items identifiés peut permettre d'obtenir 3364 en fonction des résultats des recherches effectuées localement ou à distance, des indications de perception de ces items pour au moins certains des seconds utilisateurs, ces indications de perception pouvant par exemple être propres chacune à un de ces seconds utilisateurs. L'obtention 3364 des indications de perception peut comprendre optionnellement une réception de ces indications de perception d'un dispositif tiers à qui a été transmis d'au moins un item à évaluer.

Les indications de perception peuvent varier selon les modes de réalisation. En particulier, dans certains modes de réalisation, il peut s'agir d'une valeur booléenne (indiquant par exemple une connaissance ou absence de connaissance de l'item par l'utilisateur concerné). Dans certains modes de réalisation, il peut s'agir d'un indicateur numérique prenant une valeur appartenant à un ensemble discret d'au moins 3 valeurs distinctes. Dans certains modes de réalisation, il peut s'agir d'un indicateur numérique appartenant à un intervalle numérique défini par exemple par des bornes inférieure et supérieure (paramétrables par exemple) représentatives respectivement d'une connaissance et d'une absence de connaissance de l'item par l'utilisateur concerné (ou inversement), la proximité de l'indication de perception par rapport à ces bornes étant représentative de la connaissance « perçue » du second utilisateur.

On note que selon les modes de réalisation il peut être obtenu des indications de perception pour l'ensemble des seconds utilisateurs « cibles » du partage, ou uniquement pour certains d'entre eux (par exemple ceux ayant accepté cette remontée d'informations de perception, par exemple par souscription de leur côté à un service de remontée d'indications de perception, complémentaire au service d'assistance et/ou, optionnellement, en ayant en sus activé ce service).

Le procédé 300 peut en outre comprendre une obtention 360 d'au moins une information de synthèse à partir d'au moins certaine(s) des indications de perception « individuelles » obtenues 3364 . Par exemple, une information de synthèse peut correspondre à une synthèse de la perception par l'ensemble des seconds utilisateurs (ou par un sous-ensemble de ces seconds utilisateurs) d'un des items identifiés, comme un nombre ou un pourcentage de seconds utilisateurs connaissant cet item. Un exemple de rendu peut être un libellé textuel comme « Item X connu par k% des destinataires du partage (ou en variante par p destinataires parmi les n destinataires)

Un autre exemple de rendu peut être un libellé textuel comme « Item X1: connu par p1/n destinataires » (où n représente le nombre total de destinataires).

Selon un autre exemple troisième exemple, il peut être effectué un rendu conjoint des informations de synthèse relatives à des portions de l'élément multimédia partagées de façon synchrones (par exemple un rendu conjoint des informations de synthèse relatives à des items d'une même page d'un élément multimédia paginé).

Bien évidemment, selon les modes de réalisation et selon la portion et l'élément multimédia considérées, le nombre d'informations de synthèse fournies et/ou le nombre d'informations de synthèse fournies simultanément peuvent varier.

On note que la fourniture 370 d'une information de synthèse relative à un item peut comprendre en sus, de façon optionnelle, une désignation 372 d'au moins une portion de l'élément multimédia. Dans l'exemple de la figure 3B , il peut s'agir notamment d'une portion de l'élément multimédia dans laquelle a été identifié cet item. Cette désignation peut varier selon les modes de réalisation. Elle peut comprendre par exemple une désignation d'un numéro de page de l'élément multimédia concerné, s'il s'agit d'un document paginé, et/ou une désignation d'une position de l'item auquel se rapporte l'information de synthèse dans la portion concernée, ...).

Dans le cas où la fourniture comprend un rendu de l'information de synthèse, le procédé peut comprendre un rendu conjoint d'une indication relative à la portion désignée, comme par exemple un libellé, une mise en évidence graphique (comme un surlignage, couleur particulière associée à la portion dans une carte de chaleur rendue conjointement à l'élément multimédia, etc...), etc.. Le rendu de l'information peut selon les modes de réalisation être synchronisé avec le rendu de la portion de l'élément multimédia contenant l'item auquel se rapporte l'information de synthèse ou être effectué au fil de l'eau (même si l'item auquel se rapporte l'information de synthèse n'est plus rendu). Un tel mode de réalisation peut par exemple aider un présentateur à apporter « après coup » des compléments relatifs à cet item.

On présente à présent en liaison avec la figure 3C d'autres modes de réalisation où le procédé comprend une transmission 340 de l'élément multimédia, lors ou après son obtention 320, sans analyse préalable, par le dispositif 200, de cet élément multimédia. Il peut s'agir par exemple d'un partage d'un élément multimédia lors d'une visioconférence, avec consommation synchrone de cet élément multimédia par les seconds utilisateurs. Il peut aussi s'agir d'un partage d'un contenu multimédia (par messagerie électronique par exemple) en vue d'une consommation ultérieure de ce contenu par un ou plusieurs des seconds utilisateurs. Dans de tels modes de réalisation, l'analyse peut être effectuée par un dispositif tiers (comme le serveur 160 et/ou les dispositifs des seconds utilisateurs)

Par simplicité, la souscription au service d'assistance (optionnelle) n'est pas illustrée en figure 3C.

Comme illustré en figure 3C, le procédé peut comprendre une transmission 340 de l'élément multimédia au moins partiellement obtenu vers au moins un dispositif tiers (comme le serveur 160 et/ou les dispositifs des seconds utilisateurs) . Ainsi la figure 3C montre une transmission vers p dispositifs tiers (p entier au moins égal à 1). Comme illustré, le procédé 300 comprend une réception 350, en provenance d'au moins un de ces dispositif tiers, d'au moins une indication de perception (réception 352) d'au moins certains des seconds utilisateurs, relativement à au moins une portion de l'élément multimédia transmis (par exemple relative à au moins un item contenu dans cette portion). Ainsi la figure 3C montre une réception de p2 indications de perception (p2 entier au moins égal à 1). Ces indications de perception peuvent être similaires aux indications de perception déjà décrites en liaison avec la figure 3B.

Comme illustré en figure 3C, le procédé peut comprendre, optionnellement, une réception d'une désignation (réception 354) d'au moins une portion de l'élément multimédia, en association avec au moins une indication de perception reçue 352, cette indication de perception étant alors relative à cette portion. Par exemple, **il** peut s'agir d'une réception en association d'une désignation d'une portion de l'élément multimédia comprenant un item (tel que décrit ci-avant) auquel se rapporte l'indication de perception reçue. Selon les modes de réalisation, l'information de désignation et l'indication de perception peuvent être reçues 350, 352, 354 de façon conjointes ou séquentiellement.

Le procédé 300 peut en outre comprendre une obtention 360 d'au moins une information de synthèse à partir des désignations de portions reçues 352 et des indications de perception « individuelles » reçues 354. Selon un premier exemple, une information de synthèse peut correspondre à une synthèse des indications de perception reçus pour une même portion de l'élément multimédia (comme par exemple un item audiovisuel tel qu'introduit ci-avant). Selon un deuxième exemple, une information de synthèse peut correspondre à une synthèse des indications de perception reçus associés à des portions ayant au moins une partie commune. Le procédé 300 peut en outre comprendre une fourniture 370 de l'information de synthèse obtenue 360. Comme exposé ci-avant, cette fourniture peut être accompagnée de façon optionnelle d'une désignation 372 d'au moins une portion de l'élément multimédia. Dans le mode de réalisation illustré en figure 3C, il peut s'agir d'au moins une portion associée à au moins une indication de perception à partir duquel l'information de synthèse a été obtenue. Par exemple, la portion désignée peut être une portion associée à l'ensemble des indications de perception à partir desquelles l'information de synthèse a été obtenue, ie une « intersection » des portions associées à chacun des indications de perception à partir desquelles l'information de synthèse a été obtenue. Selon un autre exemple, la portion désignée peut être une portion rassemblant l'ensemble des portions associées à des indications de perception à partir desquelles l'information de synthèse a été obtenue, ie une « union » (ou agrégation) des portions associées à chacune des indications de perception à partir desquelles l'information de synthèse a été obtenue.

On présente à présent plus en détail , en liaison avec les figures 4A à 4C, certains modes de réalisation du procédé de remontée 400 de la présente demande. Le procédé de remontée, dans les modes de réalisation détaillés en lien avec la figure 4A (respectivement 4B, respectivement 4C) peut notamment être utilisé pour traiter des données issues du procédé d'assistance de la figure 3A (respectivement 4B, respectivement 4C).

Par exemple, le procédé de remontée peut être mis en œuvre lors de chaque réception de données (élément multimédia, item..) issues du procédé d'assistance. Il peut aussi être mis de façon systématique lors de l'obtention d'un élément multimédia partagé (de façon périodique ou au fur et à mesure du rendu de l'élément multimédia), ou sur réception d'une requête spécifique provenant du dispositif partageant cet élément multimédia ou du second utilisateur (via l'interface utilisateur du dispositif 200 par exemple).

Le procédé 400 peut par exemple être implémenté par le dispositif électronique 200 illustré en figure 2. Il peut s'agir notamment d'un dispositif (qualifié dans la présente demande de « second » dispositif) dont un utilisateur (qualifié dans la présente demande de « second » utilisateur) est l'une des personnes avec qui un utilisateur d'un premier dispositif souhaite partager, ou partage effectivement, au moins partiellement un élément multimédia. Le procédé est mis en œuvre pour permettre une remontée d'au moins une indication de perception, pour ce second utilisateur, relative à une ou plusieurs portions de cet élément multimédia. Selon les modes de réalisation, il peut s'agir d'une perception « a priori » pour ce second utilisateur ou d'une perception effective. Le second dispositif peut être un serveur ou un terminal de communication par exemple.

Comme illustré en figure 4A, le procédé 400 de remontée peut comprendre une obtention 450 d'au moins une indication de perception, pour ce second utilisateur, relative à une ou plusieurs portions de cet élément multimédia. Il peut s'agir par exemple d'au moins une indication de perception comme décrit ci-avant en liaison avec l'une des figures 3A, 3B et/ou 3C et/ou ci-après en liaison avec la figure 4B ou 4C.

Le procédé 400 de remontée peut en outre comprendre une transmission 460 d'au moins certaine(s) des indication(s) de **perception** obtenues() vers un dispositif émetteur de l'élément multimédia (par exemple le dispositif du premier utilisateur ou un serveur d'application). Cette transmission peut être conditionnelle (par exemple, dans certains modes de réalisation, seules certaines indications de perception obtenues peuvent être transmises (par exemple seules les indications de perception obtenues représentatives d'une faible connaissance ou compréhension du second utilisateur peuvent être transmises)).

On note que le procédé 400 de remontée peut être mis en œuvre selon les modes de réalisation de façon systématique ou sur souscription 410 à un service (et éventuellement activation manuelle de ce service par le second utilisateur).

On présente à présent plus en détails l'obtention d'indications de perception en relation avec la figure 4B, dans des modes de réalisation (par exemple « au moins partiellement centralisé ») où le procédé 400 de remontée comprend une obtention 430 (une réception par exemple) d'au moins un item audiovisuel issu de l'élément multimédia (comme déjà décrit en lien avec la figure 3B) dont **il** s'agit d'évaluer la perception pour ce second utilisateur.

Par simplicité, la souscription au service de remontée d'indication(s) de perception (optionnelle) n'est pas illustrée en figure 4B.

Le procédé 400 de remontée peut ainsi comprendre une obtention 450 d'au moins une indication de la perception, par le second utilisateur, de l'item obtenu.

L'indication de perception obtenue pour un item peut être fonction d'une évaluation de la pertinence de cet item pour le second utilisateur. Elle peut par exemple tenir compte de résultats de recherches effectuées sur cet item dans des bases de connaissances. Par exemple, le procédé peut comprendre une recherche dans au moins une base de connaissance accessible au dispositif 200, comme au moins une base de connaissance répertoriant des items audiovisuels connus (respectivement mal connus) du second utilisateur (consommateur cible de l'élément multimédia). Il peut s'agir par exemple de bases associées spécifiquement au second utilisateur ou partagées entre le second utilisateur et d'autres consommateurs d'éléments multimédia, ces autres consommateurs ayant des caractéristiques communes avec le second utilisateur (comme décrit en lien avec la figure 3A). Notamment, **il** peut s'agir d'une base de connaissance accessible localement ou à distance au dispositif 200.

L'indication de perception peut aussi correspondre à un niveau d'attention portée par le deuxième utilisateur au rendu de cet item sur le dispositif 200 (par exemple une attention portée sur une zone d'écran où apparaît cet item). Ce niveau d'attention peut par exemple être mesuré par un module de suivi du regard installé sur le dispositif 200 (en fonction du temps passé à observer cet item par exemple).

L'indication de perception peut aussi correspondre à une interprétation d'une expression corporelle (faciale par exemple) ou d'un mouvement d'un second utilisateur lors du rendu de l'item par le dispositif 200 . Une telle expression corporelle ou un tel geste peut par exemple être capté par une caméra couplée à un module de suivi du regard du dispositif 200. Par exemple ; l'acquisition d'un « froncement de sourcil » pourra être interprétée comme une mauvaise connaissance par le second utilisateur de l'item considéré.

Comme illustré, le procédé peut également comprendre une transmission 460 de l'indication de perception au dispositif émetteur de l'élément multimédia (comme décrit en liaison avec la figure 4A).

On présente à présent en liaison avec la figure 4C d'autres modes de réalisation où le procédé de remontée comprend une obtention 420 (par exemple une réception) au moins partielle de l'élément multimédia. Il peut s'agir par exemple d'un élément multimédia en cours de partage ou destiné à un partage ultérieur avec le second utilisateur.

Par simplicité, la souscription au service de remontée d'indication(s) de perception (optionnelle) n'est pas illustrée en figure 4C.

Le procédé 400 de remontée peut en outre comprendre une obtention 450 d'au moins une indication de la perception, par le second utilisateur, d'au moins une portion de l'élément multimédia reçu et une obtention d'une désignation de cette portion.

Dans certains modes de réalisation, similairement à ce qui a été décrit en liaison avec la figure 3B, le procédé peut comprendre une analyse 430 de l'élément multimédia, de façon à permettre d'identifier 432 des items de cet élément multimédia dont il s'agit d'évaluer la perception (a priori ou effective) par le second utilisateur. Optionnellement, le procédé peut comprendre un filtrage 434 des items à évaluer parmi les items identifiés. Par exemple, le filtrage peut permettre de ne conserver, pour être évalués, que des items considérés, par paramétrage ou annotation de l'élément multimédia par exemple, comme importants pour l'auteur et/ou le propriétaire de l'élément multimédia, ou le premier utilisateur.

Le procédé 400 peut comprendre une obtention 450 d'indication de perception des items identifiés (et optionnellement sélectionnés) . L'obtention 450 d'une indication de perception pour un item peut être similaire à ce qui a été décrit en lien avec la figure 4B.

Ainsi, similairement à ce qui est décrit ci-avant pour la figure 4B, une indication de perception relative à un item identifié et/ou sélectionné peut être fonction de résultat(s) de recherche(s) effectuées sur cet item dans des bases de connaissances, ou correspondre à un niveau d'attention portée par le deuxième utilisateur au rendu de cet item sur le dispositif 200 ou à une expression corporelle ou à un geste de l'utilisateur lors du rendu de cette portion. Optionnellement, le procédé peut comprendre une obtention d'une désignation d'au moins une portion de l'élément multimédia à laquelle est relative au moins une indication de perception obtenue. Par exemple, il peut s'agir d'une désignation d'une portion de l'élément multimédia comprenant au moins un item (issu de l'analyse décrite ci-avant) auquel se rapporte au moins une indication de perception obtenue 430.

Dans certains modes de réalisation, une indication de perception peut être obtenue (par exemple de façon complémentaire à l'analyse décrite ci-avant) par une action manuelle du second utilisateur. Par exemple, une action manuelle du second utilisateur au moyen d'un dispositif de pointage du dispositif 200 peut permettre une désignation d'une portion à laquelle le second utilisateur peut associer manuellement une indication de perception (représentative par exemple d'une bonne ou faible connaissance d'au moins un terme de cette portion par le second utilisateur, ou d'une bonne ou mauvaise compréhension de cette portion par le second utilisateur) ou à laquelle peut être associée automatiquement une indication de perception (par paramétrage par exemple) . Ainsi, dans certains modes de réalisation, la désignation, par une souris par exemple, d'un item d'un élément multimédia rendu sur le dispositif 200 peut être associée automatiquement à une mauvaise connaissance, ou une mauvaise compréhension, de cet item par le second utilisateur. Un tel mode de réalisation peut permettre à un utilisateur consommateur de l'élément multimédia de signaler de façon très simple (lors d'un partage synchrone notamment) sa mauvaise compréhension d'un item au présentateur de cet élément multimédia.

Comme illustré, le procédé peut comprendre une transmission 460 de l'indication de perception au premier dispositif et, optionnellement, une transmission 462 de la désignation obtenue d'une portion.

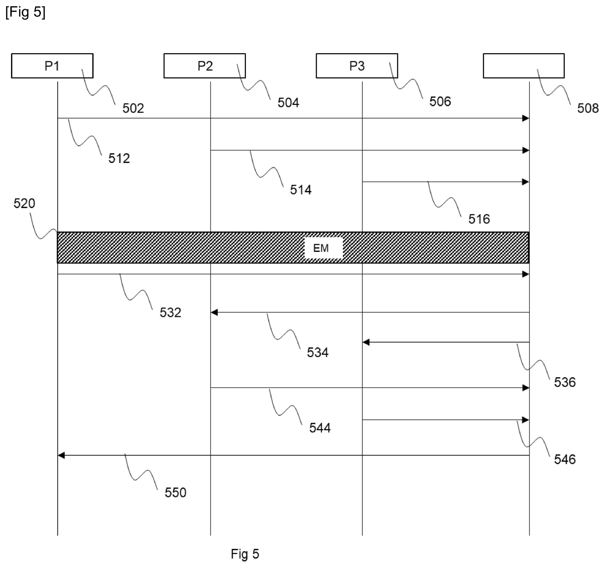

On présente à présent un cas d'usage en liaison avec la figure 5.

La figure 5 illustre, sous forme de chronogramme, certains échanges et traitement effectués entre des participants à une téléconférence, un premier participant P1 souhaitant partager un élément multimédia (un diaporama dans cet exemple) vers des seconds participants P2, P3. Les échanges ont lieu entre un premier dispositif 502 du premier participant P1 et des seconds dispositif 504, 506 de ces seconds participants, via (optionnellement) un serveur dédié 508. Comme illustré en figure 5, avant le partage 520 de l'élément multimédia, le premier dispositif souscrit t 512 à un service d'assistance au partage auprès d'un serveur dédié 508 et les seconds dispositifs 504, 506 souscrivent respectivement 514, 516 à un service complémentaire de remontées d'indication de perception auprès du serveur dédié 508.

Lors du partage 520 du diaporama, le premier participant P1 active le service d'assistance.

Le premier dispositif 502 transmet 532 la page concernée au serveur 508, qui analyse la page reçue et identifie des items à évaluer, qu'il transmet 534, 536 aux dispositifs 504 et 506. Ceux-ci consultent respectivement des bases de données locales à ces dispositifs et représentatives des connaissances des utilisateurs P2 et P3 respectivement, obtiennent des indications de pertinence (ici des niveaux de connaissance) de ces items en conséquence et les transmettent 544, 546 en retour au serveur 508 qui en déduit une information de synthèse relative aux niveaux de connaissances des items présents sur la page reçue. Le serveur transmet 550 cette information de synthèse au premier dispositif . Cette information de synthèse est rendue par le premier dispositif 502 en même temps que la page du diaporama concernée, de façon à permettre au participant P1 d'adapter la présentation orale du diaporama en conséquence.

On note que dans l'exemple illustré en figure 5, l'information de synthèse est obtenue sur demande du participant P1. En variante, les informations de synthèse peuvent être obtenues automatiquement, sans action de l'utilisateur, l'élément multimédia étant analysé au fil de l'eau par le serveur.

La présente demande peut trouver des applications dans des domaines variés, tant professionnels que personnels, pour le partage d'éléments multimédia vers de multiples destinataires.

Par exemple, elle peut permettre d'évaluer la perception d'un élément multimédia par un panel d'utilisateurs, avant une diffusion plus large de cet élément multimédia. Elle peut notamment aider à adapter un élément multimédia en fonction du public attendu de cet élément multimédia ou à adapter une présentation de cet élément multimédia en fonction de ce public attendu, sans nécessiter une connaissance préalable de ce public par l'auteur de l'élément multimédia ou par un présentateur de cet élément multimédia.

## Revendications

1. Procédé d'assistance au partage d'un élément multimédia, ledit procédé comprenant :
- Une obtention au moins partielle d'un élément multimédia destiné à être partagé par un premier utilisateur d'un premier dispositif électronique vers au moins deux seconds utilisateurs de seconds dispositifs électroniques, lesdits seconds utilisateurs étant distincts dudit premier utilisateur ;
- Une fourniture, à destination dudit premier utilisateur, d'au moins une information représentative d'une perception par au moins un desdits seconds utilisateurs d'au moins un item audiovisuel détecté dans ledit élément multimédia ou compris dans une portion dudit élément multimédia désignée par au moins un des seconds dispositifs I.

2. Procédé d'assistance au partage selon la revendication 1 où ladite information représentative tient compte d'une connaissance, par ledit au moins un second utilisateur, d'au moins un item audiovisuel présent dans ladite portion dudit élément multimédia.

3. Procédé d'assistance au partage selon la revendication 2 où le procédé comprend une détection dudit item audiovisuel dans ladite portion dudit élément multimédia et où ladite indication de perception est reçue en réponse à un envoi auxdits seconds dispositifs dudit item audiovisuel.

4. Procédé d'assistance au partage selon la revendication 3 où ladite détection dudit item audiovisuel et/ou ledit envoi dudit item audiovisuel sont effectués au fil de l'eau pendant ladite obtention dudit élément multimédia.

5. Procédé d'assistance au partage selon l'une des revendications 1 à 4 où ladite information représentative tient compte d'au moins une indication de perception reçue d'au moins un desdits second dispositifs via une interface de communication dudit premier dispositif.

6. Procédé d'assistance au partage selon l'une des revendications 1 à 5 où ladite fourniture est mise en œuvre préalablement à un partage dudit élément multimédia.

7. Procédé d'assistance au partage selon l'une des revendications 1 à 5 où ladite fourniture de ladite information représentative est mise en œuvre lors d'un partage synchrone dudit élément multimédia entre lesdits premier et seconds dispositifs, préalablement à un, et/ou lors d'un, rendu de ladite portion dudit élément multimédia.

8. Procédé de remontée, à un premier dispositif électronique, d'une perception relative à un élément multimédia, ledit procédé étant mis en œuvre par un second dispositif électronique et comprenant :
- Une obtention au moins partielle d'au moins un élément multimédia;
- Une fourniture, audit premier dispositif électronique, d'au moins une indication de perception par ledit second utilisateur d'au moins un item audiovisuel obtenu par analyse dudit élément multimédia-ladite indication étant obtenue de façon automatique par ledit second dispositif.,

9. Procédé de remontée selon la revendication 8 où ladite fourniture de ladite indication de perception est mise en oeuvre lors d'un partage synchrone dudit élément multimédia entre lesdits premier et seconds dispositifs, préalablement à un, et/ou lors d'un, rendu de ladite portion dudit élément multimédia reçu.

10. Procédé de remontée selon la revendication 9 où ledit item audiovisuel est obtenu par analyse dudit élément multimédia .

11. Procédé de remontée selon la revendication 10 où ladite analyse dudit élément multimédia est effectuée au fil de l'eau lors de ladite obtention dudit élément multimédia.

12. Procédé de remontée selon l'une des revendications 8 à 11 où ladite portion dudit élément multimédia comprend au moins un item audiovisuel et où ladite indication de perception est représentative d'une présence, respectivement d'une absence, dudit item audiovisuel dans une base de connaissance associée audit second utilisateur.

13. Procédé de remontée selon l'une des revendications 8 à 11 où ladite portion dudit élément multimédia comprend au moins un item audiovisuel et où ladite indication de perception tient compte d'une désignation dudit item audiovisuel via une interface utilisateur dudit second dispositif.

14. Système de télécommunication comprenant au moins un premier dispositif électronique et au moins un second dispositif électronique, ledit au moins un premier dispositif électronique comprenant au moins un processeur configuré pour une assistance au partage d'un élément multimédia, ladite assistance comprenant :
- une obtention au moins partielle d'un élément multimédia destiné à être partagé par un premier utilisateur dudit premier dispositif électronique vers au moins deux seconds utilisateurs dudit second dispositif électronique, lesdits seconds utilisateurs étant distincts dudit premier utilisateur ;
- une fourniture, à destination dudit premier utilisateur, d'au moins une information représentative d'une perception par au moins un desdits seconds utilisateurs d'au moins un item audiovisuel détecté dans ledit élément multimédia ou compris dans une portion dudit élément multimédia désignée par au moins un des seconds dispositifs;
Et ledit au moins un second dispositif électronique comprenant un moins un processeur configuré pour une remontée, audit premier dispositif électronique, d'une perception relative audit élément multimédia, ladite remontée comprenant:
- une obtention au moins partielle dudit au moins un élément multimédia ;
- Une fourniture, audit premier dispositif électronique, d'au moins une indication de perception par au moins un second utilisateur dudit second dispositif, d'au moins un item audiovisuel obtenu par analyse dudit élément multimédia-ladite indication de perception étant obtenue de façon automatique par ledit second dispositif.
